# EUROPEAN PATENT SPECIFICATION

(11) **EP 1 418 187 B1**
(45) Date of publication and mention of the grant of the patent: **24.02.2010**
(21) Application number: 03257091.3
(22) Date of filing: 11.11.2003
(51) Int. Cl.: C08F 220/18, C10M 145/14

(54) **Alkyl (meth) acrylate copolymers**
Alkyl(meth)acrylat-Copolymere
Copolymères (meth)acrylates d'alkyl

(30) Priority: 11.11.2002 US 291902
(43) Date of publication of application: 12.05.2004
(73) Proprietor: Afton Chemical Intangibles LLC, Richmond, Virginia 23219 (US)
(72) Inventor: Liesen, Gregory Peter, Mechanicsville Virgina 23111 (US)
(74) Representative: Cresswell, Thomas Anthony

(56) References cited:
- EP-A- 0 635 560
- EP-A- 0 635 561

## Description

### TECHNICAL FIELD

This invention relates to novel alkyl (meth) acrylate copolymers having excellent low temperature properties and shear stability in a wide variety of base oils. The present invention also relates to the use of these copolymers as viscosity index improvers for lubricating oils. In addition, this invention demonstrates a benefit with respect to compatibility of said VIIs with additive packages.

### BACKGROUND OF THE INVENTION

Polymethacrylate (PMA) viscosity index improvers (VIIs) are well known in the lubricating industry. Many attempts have been made to produce PMA VIIs that have the desired balance of high temperature and low temperature viscometrics, as well as the required shear stability for a given application. Refiners who blend with different base oils desire a single product that performs effectively in all of these different base oils.

The present invention is directed to novel alkyl (meth) acrylate copolymers which exhibit excellent low temperature performance and superior shear stability in a wide variety of base oils. The copolymers of the present invention also demonstrate superior compatibility with other additives. While combinations of various alkyl (meth) acrylates may be found in viscosity index improver formulations, specific reliance on copolymers of C₃-C₇ alkyl (meth) acrylates, with the exclusion of methyl (meth) acrylate, leads to the novelty of the present invention.

U.S. Patent No. 6,103,673 discloses a composition that includes a variety of poly (meth) acrylates as viscosity modifiers. The broad objective of the '673 patent is to prepare a viscosity modifier incorporating poly (meth) acrylates having alkyl groups containing from 1 to 18 carbon atoms. (Column 5, lines 29-33) Specifically, the '673 patent discloses a viscosity modifier prepared using butyl (meth) acrylate as one component in a mix of poly (meth) acrylates. (Column 7, line 12) However, the '673 patent does not teach the contribution of the present invention, which is the primary use of C₃-C₇ alkyl (meth) acrylate copolymers and the benefit resulting from the exclusion of methyl (meth) acrylate, ultimately yielding a superior viscosity index improver.

The present invention is directed to butyl (meth) acrylate copolymers in a viscosity index improver (VII) formulation, whereas the preferred nitrogen-containing dispersant-type viscosity modifiers of the '673 patent are notably different. For example, the '673 patent's specification discloses as its preferred embodiment a composition consisting essentially of C₁₂-C₂₄ (meth) acrylates (Column 6, lines 44-46), with the remaining active monomers being nitrogen-containing. The scope of the '673 patent also differs from that of the present invention, which additionally eliminates methyl (meth) acrylate materials from its product to achieve superior low temperature properties.

U.S. Patent No. 6,271,184 discloses an optional component of methacrylic acid esters containing from 2 to about 8 carbon atoms in the ester group. The '184 patent presents embodiments that do not utilize a methacrylic acid component, and it is stipulated in the '184 patent that methyl (meth) acrylate is especially preferred. The teaching of the '184 patent additionally provides that the optional component may be a nitrogen-containing monomer, styrene, or substituted styrene. While various alkyl (meth) acrylate monomers are discussed in the '184 patent, the preferred use of methyl (meth) acrylate as a constituent in the composition does not articulate the novelty of the present invention.

Specifically, in an embodiment, the composition of the present invention is essentially free from methyl (meth) acrylate, in favor of C₃-C₇ alkyl (meth) acrylate copolymers in a viscosity improver formulation.

### SUMMARY OF THE INVENTION

The present invention is directed to a novel formulation of alkyl (meth) acrylate copolymers and their use as viscosity index improvers for lubricating oils.

The alkyl (meth) acrylate copolymers of the present invention comprise material derived from the combining of:
(A) 12 to 14 weight percent C₃-C₇ alkyl (meth) acrylate copolymers;
(B) 82 to 88 weight percent of C₁₂-C₁₄ alkyl (meth) acrylates; and
(C) 0 to 6 weight percent of C₁₆-C₂₀ alkyl (meth) acrylates.

### DETAILED DESCRIPTION OF THE INVENTION

The present invention is directed, in an embodiment, to alkyl (meth) acrylate copolymers comprising material derived from the combining of:
(A) 12 to 14 weight percent C₃-C₇ alkyl (meth) acrylate copolymers;
(B) 82 to 88 weight percent of C₁₂-C₁₄ alkyl (meth) acrylates; and
(C) 0 to 6 weight percent of C₁₆-C₂₀ alkyl (meth) acrylates.

Alkyl (meth) acrylate copolymers of the present invention can comprise the product, reaction product or products resulting from the process of combining:
(A) 12 to 14 weight percent C₃-C₇ alkyl (meth) acrylate copolymers;
(B) 82 to 88 weight percent of C₁₂-C₁₄ alkyl (meth) acrylates; and
(C) 0 to 6 weight percent of C₁₆-C₂₀ alkyl (meth) acrylates.

The present invention also provides a process of producing a lubricating oil comprising adding to an oil of lubricating viscosity a copolymer of the present invention.

The present invention further provides a lubricating oil composition comprising:
(A) an oil of lubricating viscosity; and
(B) a copolymer of the invention.

Also provided is an automatic transmission lubricated with a composition of the invention.

Further provided is a vehicle comprising such an automatic transmission.

Additionally provided is a method for lubricating a continuously variable transmission, comprising applying thereto said composition.

Further provided is a method for (a) improving the low temperature properties of an oil, or (b) improving the compatibility of a lubricating oil containing additive components, or (c) improving the viscosity index of a lubricating oil, said method comprising adding to an oil of lubricating viscosity a copolymer of the invention.

As used herein, "combining" may be used to mean the mixing, blending, contacting, free-radical polymerization, sequential polymerization, or anionic polymerization of elements in a composition.

Also, as used herein, a "C₃-C₇ alkyl (meth) acrylate" means an alkyl ester of acrylic or methacrylic acid having a straight or branched alkyl group of 3 to 7 carbon atoms per group, including but not limited to, *n*-propyl, isopropyl, *n*-butyl, isobutyl, *tert*-butyl, *n*-pentyl, isopentyl, *n*-hexyl, and *n*-heptyl monomers.

In one embodiment of the present invention, *n*-propyl (meth) acrylate is used as component (A). In another embodiment of the present invention, isopropyl (meth) acrylate is used as component (A). In another embodiment of the present invention, *n*-butyl (meth) acrylate is used as component (A). In another embodiment of the present invention, isobutyl (meth) acrylate is used as component (A). In another embodiment, *tert*-butyl (meth) acrylate is used as component (A). In another embodiment of the present invention, *n*-pentyl (meth) acrylate is used as component (A). In another embodiment, isopentyl (meth) acrylate is used as component (A). In another embodiment of the present invention, *n-*hexyl (meth) acrylate is used as component (A). In another embodiment, n-heptyl (meth) acrylate is used as component (A). Preferably, the C₃-C₇ alkyl (meth) acrylate is butyl (meth) acrylate.

As used herein, "at least one C₁₂-C₁₄ alkyl (meth) acrylate" means an alkyl ester of acrylic or methacrylic acid having a straight or branched alkyl group of 12 to 14 carbon atoms per group, including, but not limited to, *n*-dodecyl, *t*-dodecyl, and *n*-tetradecyl monomers.

As used herein, "at least one C₁₆-C₂₀ alkyl (meth) acrylate" means an alkyl ester of acrylic or methacrylic acid having a straight or branched alkyl group of 16 to 20 carbon atoms per group, including, but not limited to, *n*-hexadecyl, *n*-octadecyl, and *n*-eicosyl monomers.

It is an object in an embodiment of this invention to optimize the C₃-C₇ alkyl (meth) acrylate concentrations in the composition, and reduce or preferably eliminate methyl (meth) acrylate components. This enhances compatibility with additive packages while preserving desirable low temperature and shear stability properties. Therefore, it is a further object of this invention is to improve the composition's compatibility with components in additive packages.

The comonomers in the alkyl groups useful in one embodiment of the present invention are generally prepared by standard esterification procedures using technical grades of long chain aliphatic alcohols. These commercially available alcohols are mixtures of alcohols of varying chain lengths in the alkyl groups. Consequently, for the purposes of this invention, an alkyl (meth) acrylate is intended to include not only the individual alkyl (meth) acrylate product named, but also to include mixtures of the alkyl (meth) acrylates with a predominant amount of the particular alkyl (meth) acrylate named. However, it is an objective of the present invention to reduce or eliminate methyl (meth) acrylate constituents from the composition.

In a preferred embodiment, the C₃-C₇ alkyl (meth) acrylate copolymers of the present invention comprise the polymerization reaction products of (A); (B), and (C). However, those skilled in the art will appreciate that minor levels of other monomers, polymerizable with monomers (A), (B), and (C), disclosed herein, may be present as long as they do not adversely affect the low temperature properties of the fully formulated fluids. Typically, additional nonspecific monomers are present in an amount of less than about 5 weight percent, preferably in an amount of less than 3 weight percent, most preferably in an amount of less than 1 weight percent. In a preferred embodiment, the sum of the weight percent of (A), (B), and (C) equals 100%. Thus, as an objective of the present invention is to eliminate methyl (meth) acrylate from the product, a composition that is "essentially free" of methyl (meth) acrylate will encompass those containing trace amounts of methyl (meth) acrylate as described above. Preferably, the copolymers of the invention are essentially free from methyl (meth)acrylate units.

The copolymers of the present invention may be prepared using various polymerization techniques including free-radical and anionic polymerization.

Conventional methods of free-radical polymerization can be used to prepare the copolymers of the present invention. Polymerization of the acrylic and/or methacrylic monomers can take place under a variety of conditions, including bulk polymerization, solution polymerization, usually in an organic solvent, preferably mineral oil, emulsion polymerization, suspension polymerization and non-aqueous dispersion techniques.

"Reaction product," as used herein, is intended to mean the material resulting from the mixing, blending, contacting, reacting, polymerizing, anionic polymerizing, and/or copolymerizing of two or more materials.

Solution polymerization is preferred. In solution polymerization, a reaction mixture is prepared comprising a diluent, the alkyl (meth) acrylate monomers, a polymerization initiator, and a chain transfer agent.

In an embodiment, the diluent may be any inert hydrocarbon and is preferably a hydrocarbon lubricating oil that is compatible with or identical to the lubricating oil in which the copolymer is to be subsequently used. The mixture includes, e.g., from about 15 to about 400 parts by weight (pbw) diluent per 100 pbw total monomers and, more preferably, from about 50 to about 200 pbw diluent per 100 pbw total monomers. As used herein, "total monomer charge" means the combined amount of all monomers in the initial, i.e., unreacted, reaction mixture.

In preparing the copolymers of the present invention by free-radical polymerization, the acrylic monomers may be polymerized simultaneously or sequentially, in any order. In at least one preferred embodiment, the total monomer charge includes from 12 to 14, preferably 12 to 13, weight percent of at least one C₃-C₇ alkyl (meth) acrylate; 82 to 88 weight percent of at least one C₁₂-C₁₄ alkyl (meth) acrylate; and 0 to 6, preferably 0 to 3, weight percent of at least one C₁₆-C₂₀ alkyl (meth) acrylate. The most preferred embodiment, presented herein, is one in which the total monomer charge comprises 12 to 14 weight percent butyl (meth) acrylate, 86 to 88 weight percent of at least one C₁₂-C₁₄ alkyl (meth) acrylate, and 0 to 3 weight percent of at least one C₁₆-C₂₀ alkyl (meth) acrylate.

Suitable polymerization initiators include initiators which disassociate upon heating to yield a free radical, e.g., peroxide compounds such as benzoyl peroxide, t-butyl perbenzoate, *t*-butyl peroctoate and cumene hydroperoxide; and azo compounds such as azoisobutyronitrile and 2,2'-azobis (2-methylbutanenitrile). The reaction mixture typically includes from about 0.01 wt% to about 1.0 wt% initiator relative to the total monomer mixture.

Suitable chain transfer agents include those conventional in the art, e.g., dodecyl mercaptan and ethyl mercaptan. The selection of the amount of chain transfer agent to be used is based on the desired molecular weight of the polymer being synthesized as well as the desired level of shear stability for the polymer, i.e., if a more shear stable polymer is desired, more chain transfer agent can be added to the reaction mixture. Preferably, the chain transfer agent is added to the reaction mixture in an amount of 0.01 to 5 weight percent, preferably 0.02 to 3 weight percent, relative to the monomer mixture.

By way of example and without limitation, the reaction mixture is charged to a reaction vessel that is equipped with a stirrer, a thermometer and a reflux condenser and heated with stirring under a nitrogen blanket to a temperature from about 50°C to about 125°C, for a period of about 0.5 hours to about 8 hours to carry out the copolymerization reaction. In another embodiment, the copolymers may be prepared by initially charging a portion, e.g., about 25 to 60% of the reaction mixture to the reaction vessel and heating. The remaining portion of the reaction mixture is then metered into the reaction vessel, with stirring and while maintaining the temperature of the batch within the above describe range, over a period of about 0.5 hours to about 8 hours. A viscous solution of the copolymer of the present invention in the diluent is obtained as the product of the above-described process.

To form the lubricating oil compositions of the present invention, a base oil is treated with at least one of the alkyl (meth) acrylate copolymers of the present invention in a conventional manner, i.e., by adding the alkyl (meth) acrylate copolymer to the base oil to provide a lubricating oil composition having the desired low temperature properties. In an embodiment of the present invention, the lubricating oil contains from 12 to 14 parts by weight (pbw), preferably 12 to 13 pbw, of at least one of the C₃-C₇ alkyl (meth) acrylates (i.e., excluding diluent oil) per 100 of the monomer mixture. In a particularly preferred embodiment, the alkyl (meth) acrylate copolymer is added to the base oil in the form of a relatively concentrated solution of the copolymer in a diluent. The relative amount of the (meth) acrylate copolymer(s) in the concentrated VII solution of the preferred embodiment can be, for example, 80 weight%, and can be ultimately diluted to approximately 60 weight% polymer for improved compatibility. The diluent includes any of the oils referred to below that are suitable for use as base oils.

In one embodiment, the composition comprises the copolymer of the present invention in an amount of from 1 to 30 parts by weight of active copolymer per 100 parts by weight of oil in the final composition.

Figure 1, shown below, demonstrates that the low temperature properties of the present invention are best achieved using a specific range of concentrations of C₃-C₇ (meth) acrylate in the neat copolymer. The preferred embodiment, butyl (meth) acrylate, was tested at concentrations ranging from 7.5 weight% to 23 weight%. As shown in Figure 1, butyl (meth) acrylate at concentrations less than 10 weight% demonstrated -40°C Brookfield Viscosities that were in excess of 10,000 (not acceptable). At concentrations greater than 18 weight%, butyl (meth) acrylate again exceeded acceptable -40°C Brookfield Viscosity levels. In order to achieve desirable low temperature properties, the optimal range of concentrations for butyl (meth) acrylate fell within the range of approximately 10 weight% and 18 weight%.

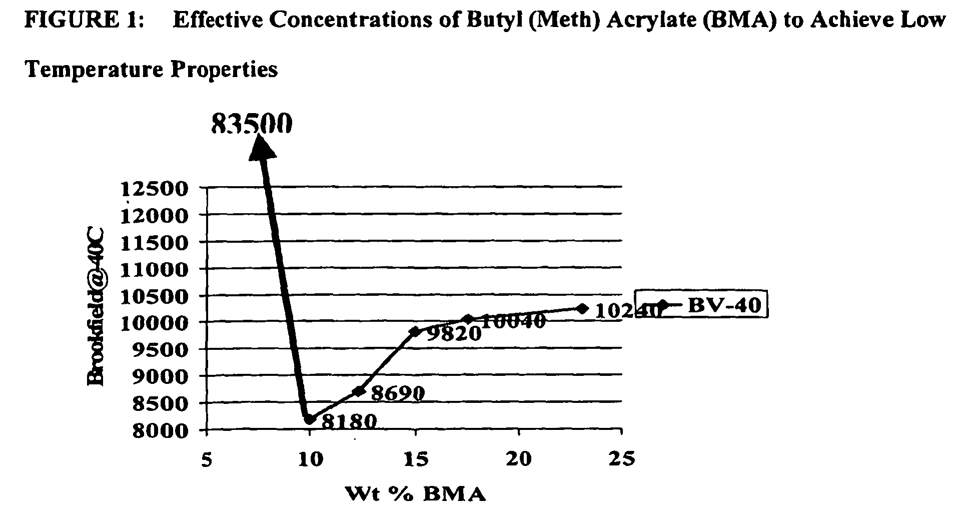

A final formulation containing additives and alkyl (meth) acrylate copolymers must be evaluated for compatibility of components, as well as performance as a viscosity index improver. The preferred embodiment of the present invention was further evaluated, utilizing butyl (meth) acrylate in a concentrate of approximately 80 weight% copolymer. Ultimately a final product was diluted to a ratio in which the copolymer component in the VII is generally 58 weight%. The optimal weight% range for butyl (meth) acrylate in a formulation is thus evaluated based upon at least two criteria: effectiveness as a VII at low temperatures, and degree of haziness or separation of components when combined with other additives-an indicator of compatibility. Using the effective low-temperature range of butyl (meth) acrylate concentrations provided by Figure 1 (above), compatibility with additive packages was evaluated and the results are shown in Table 1.

**Table 1: Compatibility of Copolymers of Butyl (meth) Acrylate (BMA) at Varying Concentrations of BMA with an Additive Package**

| **Sample** | **Wt % BMA** | **Number of Days Before Indication of Dropout** |
|---|---|---|
| (A) | 7.5 | Clear after 1 month |
| (B) | 10 | Hazy near bottom after 1 month |
| (C) | 12.3 | 5 |
| (D) | 15 | 3 |
| (E) | 17.5 | 2 |
| (F) | 23.1 | 2 |

The butyl (meth) acrylate containing copolymer:additive package compatibility differed based upon the level of butyl (meth) acrylate in the prepared copolymer. For example, Samples (A) and (B) were clear for long periods of time, demonstrating successful compatibility with the additive package. Sample (C) demonstrated acceptable compatibility, followed by a separation after five days. Samples (D), (E), and (F) were not as compatible as preferred, having separation of the copolymer from the formulation in three days or less.

A comparison analysis using methyl (meth) acrylate copolymers was performed. Methyl (meth) acrylate is a preferred component in many conventional poly (meth) acrylate viscosity index improvers. It is noted that the present invention is essentially free of methyl (meth) acrylate. The comparison analysis utilized butyl (meth) acrylate at two concentrations, 17.5 wt% and 23.0 wt%, and methyl (meth) acrylate at 17.5 wt%. Even at the higher concentration of butyl (meth) acrylate (BMA) of 23.0 wt%, less haziness and separation was shown in comparison to the sample of methyl (meth) acrylate (MMA). Table 2 demonstrates increased haziness and separation when the formulation incorporates MMA instead of BMA at a cold temperature (-1°C), room temperature, and at 60°C.

**Table 2: Compatibility Comparison of Copolymers with an additive package:Representative levels of Butyl (Meth) Acrylate to Methyl (Meth) Acrylate**

| | **STORAGE DURATION AND TEMPERATURE** | | | | | |
|---|---|---|---|---|---|---|
| | **-1°C** | | **Room Temperature** | | **60°C** | |
| | **3 Days** | **10 Days** | **3 Days** | **10 Days** | **3 Days** | **10 Days** |
| BMA (17.5 wt%) | clear | slight haze | clear | clear | clear | clear |
| BMA (23.0 wt%) | slight haze | slight haze | very slight haze | very slight haze | clear | very slight haze |
| MMA (17.5 wt%) | hazy | hazy | hazy | hazy | hazy | hazy, 1 mm separation |

Furthermore, samples of VII formulations incorporating butyl (meth) acrylate and methyl (meth) acrylate were compared for performance at equivalent molar concentrations. The sample of methyl (meth) acrylate achieved a Brookfield viscosity at -40°C of >153,000 cP, exceeding the 14,000 cP maximum allowed. The sample using butyl (meth) acrylate achieved a Brookfield viscosity at -40°C of 8,480 cP, a superior and successful performance. Thus, not only is butyl (meth) acrylate demonstrated to be more compatible with additive components, but it is also superior in performance to methyl (meth) acrylate formulations.

The copolymers of the present invention include the preferred embodiment, butyl (meth) acrylate, as well as C₃-C₇ alkyl (meth) acrylates as described herein. As may be understood from Table 2, it is particularly important in achieving the present invention's compatibility with additive packages to reduce or eliminate methyl (meth) acrylate from the concentrate and lubricating oil compositions. Accordingly, the compositions of the present invention are preferably essentially free from methyl(meth)acrylate units.

The copolymers of the present invention typically have a relative number average molecular weight, as determined by gel permeation chromatography using polymethyl methacrylate standards, between 5,000 and 50,000, preferably 7,500 to 25,000.

The molecular weight of the alkyl (meth) acrylate copolymer additive of the present invention must be sufficient to impart the desired thickening properties to the lubricating oil. As the molecular weight of the polymers increase, the copolymers become more efficient thickeners; however, the polymers can undergo mechanical degradation in particular applications and for this reason, polymer additives with number-average molecular weights (Mw) above about 50,000 are generally not suitable for certain applications because they tend to undergo "thinning" due to molecular weight degradation resulting in loss of effectiveness as thickeners at the higher use temperatures (for example, at 100° C). Thus, the molecular weight is ultimately governed by thickening efficiency, required shear stability, cost, and the type of end-use application.

Those skilled in the art will recognize that the molecular weights set forth throughout this specification are relative to the methods by which they are determined. For example, molecular weights determined by GPC, and molecular weights calculated by other methods, may have different values. It is not molecular weight per se, but the handling characteristics and performance of a polymeric additive (shear stability, low temperature performance and thickening power under use conditions) that are important. Generally, shear stability is inversely proportional to molecular weight. A VII additive with good shear stability (low SSI value) is typically used at higher initial concentrations relative to another additive having reduced shear stability (high SSI value) to obtain the same target thickening effect in a treated fluid at high temperatures; the additive having good shear stability may, however, produce unacceptable thickening at low temperatures due to the higher use concentrations.

Conversely, although lubricating oils containing lower concentrations of reduced shear stability VI-improving additives may initially satisfy the higher temperature viscosity target, fluid viscosity will decrease significantly with use causing a loss of effectiveness of the lubricating oil. Thus, the reduced shear stability of specific VI-improving additives may be satisfactory at low temperatures (due to its lower concentration) but it may prove unsatisfactory under high temperature conditions. Thus, polymer composition, molecular weight and shear stability of VI improvers must be selected to achieve a balance of properties that satisfy both high and low temperature performance requirements.

The finished lubricating oil composition may include other additives in addition to the copolymer of the present invention, e.g., oxidation inhibitors, corrosion inhibitors, friction modifiers, antiwear agents, extreme pressure agents, detergents, dispersants, antifoamants, additional viscosity index improvers, and pour point depressants.

Base oils contemplated for use in this invention include natural oils, synthetic oils and mixtures thereof. Suitable base oils also include basestocks obtained by isomerization of synthetic wax and slack wax, as well as basestocks produced by hydrocracking (rather than solvent extracting) the aromatic and polar components of the crude. In general, both the natural and synthetic base oils will each have a kinematic viscosity ranging from about 1 to about 40 cSt at 100° C., although typical applications will require each oil to have a viscosity ranging from about 2 to about 20 cSt at 100° C.

Natural base oils can include, but are not limited to, animal oils, vegetable oils (e.g., castor oil and lard oil), petroleum oils, mineral oils, and oils derived from coal or shale. The preferred natural base oil is mineral oil.

The mineral oils useful in this invention include all common mineral oil base stocks. This would include oils that are naphthenic or paraffinic in chemical structure. Oils that are refined by conventional methodology using acid, alkali, and clay or other agents such as aluminum chloride, or they may be extracted oils produced, for example, by solvent extraction with solvents such as phenol, sulfur dioxide, furfural, dichlordiethyl ether, etc. They may be hydrotreated or hydrorefined, dewaxed by chilling or catalytic dewaxing processes, or hydrocracked. The mineral oil may be produced from natural crude sources or be composed of isomerized wax materials or residues of other refining processes.

Typically the base oils will have kinematic viscosities of from 2 cSt to 40 cSt at 100° C. The preferred base oils have kinematic viscosities of from 2 to 20 cSt at 100° C.

The American Petroleum Institute has categorized these different basestock types as follows: Group I, >0.03 wt. % sulfur, and/or <90 vol% saturates, viscosity index between 80 and 120; Group II, ≤ 0.03 wt. % sulfur, and ≥ 90 vol% saturates, viscosity index between 80 and 120; Group III, ≤ 0.03 wt. % sulfur, and ≥ 90 vol% saturates, viscosity index > 120; Group IV, all polyalphaolefins.

Group II and Group III basestocks are typically prepared from conventional feedstocks using a severe hydrogenation step to reduce the aromatic, sulfur and nitrogen content, followed by dewaxing, hydrofinishing, extraction and/or distillation steps to produce the finished base oil. Group II and III basestocks differ from conventional solvent refined Group I basestocks in that their sulfur, nitrogen and aromatic contents are very low. As a result, these base oils are compositionally very different from conventional solvent refined basestocks. Hydrotreated basestocks and catalytically dewaxed basestocks, because of their low sulfur and aromatics content, generally fall into the Group II and Group III categories. Polyalphaolefins (Group IV basestocks) are synthetic base oils prepared from various alpha olefins and are substantially free of sulfur and aromatics.

Synthetic base oils include hydrocarbon oils and halo-substituted hydrocarbon oils such as oligomerized, polymerized, and interpolymerized olefins (such as polybutylenes, polypropylenes, propylene, isobutylene copolymers, chlorinated polylactenes, poly(1-hexenes), poly(1-octenes) and mixtures thereof); alkylbenzenes (including dodecyl-benzenes, tetradecylbenzenes, dinonyl-benzenes and di(2-ethylhexyl)benzene); polyphenyls (such as biphenyls, terphenyls and alkylated polyphenyls); and alkylated diphenyl ethers, alkylated diphenyl sulfides, as well as their derivatives, analogs, and homologs thereof, and the like. The preferred synthetic oils are oligomers of alpha-olefins, particularly oligomers of 1-decene, also known as polyalpha olefins or PAO's.

Synthetic base oils also include alkylene oxide polymers, interpolymers, copolymers, and derivatives thereof where the terminal hydroxyl groups have been modified by esterification, etherification, etc. This class of synthetic oils is exemplified by: polyoxyalkylene polymers prepared by polymerization of ethylene oxide or propylene oxide; the alkyl and aryl ethers of these polyoxyalkylene polymers (e.g., methyl-polyisopropylene glycol ether having an average molecular weight of 1000, diphenyl ether of polypropylene glycol having a molecular weight of 100-1500); and mono- and poly-carboxylic esters thereof (e.g., the acetic acid esters, mixed C₃-C₈ fatty acid esters, and C₁₂ oxo acid diester of tetraethylene glycol).

Another suitable class of synthetic lubricating oils comprises the esters of dicarboxylic acids (e.g., phthalic acid, succinic acid, alkyl succinic acids and alkenyl succinic acids, maleic acid, azelaic acid, subric acid, sebasic acid, fumaric acid, adipic acid, linoleic acid dimer, malonic acid, alkylmalonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoethers, propylene glycol, etc.). Specific examples of these esters include dibutyl adipate, diisobutyl adipate, di(2-ethylhexyl) sebacate, di-*n*-hexyl fumarate, dioctyl sebacate, diisooctyl phthalate, diisooctyl azelate, diisooctyl adipate, diisodecyl azelate, didecyl phthalate, diisodecyl adipate, dieicosyl sebacate, the 2-ethylhexyl diester of linoleic acid dimer, and the complex ester formed by reacting one mole of sebasic acid with two moles of tetraethylene glycol and two moles of 2-ethyl-hexanoic acid, and the like. A preferred type of oil from this class of synthetic oils are adipates of C₄ to C₁₂ alcohols.

Esters useful as synthetic base oils also include those made from C₅ to C₁₂ monocarboxylic acids and polyols and polyol ethers such as neopentyl glycol, trimethylolpropane pentaerythritol, dipentaerythritol, tripentaerythritol, and the like.

Silicon-based oils (such as the polyalkyl-, polyaryl-, polyalkoxy-, or polyaryloxy-siloxane oils and silicate oils) comprise another useful class of synthetic lubricating oils. These oils include tetra-ethyl silicate, tetraisopropyl silicate, tetra-(2-ethylhexyl) silicate, tetra-(4-methyl-2-ethylhexyl) silicate, tetra-(*p*-*tert*-butylphenyl) silicate, hexa-(4-methyl-2-pentoxy)-disiloxane, poly(methyl)-siloxanes and poly (methylphenyl) siloxanes, and the like. Other synthetic lubricating oils include liquid esters of phosphorus containing acids (e.g., tricresyl phosphate, trioctylphosphate, and diethyl ester of decylphosphonic acid), polymeric tetra-hydrofurans, poly-α-olefins, and the like.

Preferably, the compositions of the invention are essentially free from methyl(meth)acrylate units.

Lubricating oil compositions of the present invention comprising the alkyl (meth) acrylate copolymers of the present invention may be used in numerous applications including gear lubrication, automatic transmission fluids, continuously variable transmission fluids, manual transmission fluids, hydraulic fluids, crankcase applications and shock absorber fluids. Preferably, the compositions is a gear lubricant. It is further preferred that the composition is an automatic transmission fluid. It is also preferred that the composition is a continuously variable transmission fluid.

Depending upon the intended end use of the lubricating oil formulations and the compositions of the present invention, the shear stability of the inventive acrylate copolymer can be adjusted by controlling the amount of initiator and/or chain transfer agent present in the polymerization reaction mixture.

For example, in automatic transmission fluid applications it may be desired to have a highly shear stable lubricating fluid. In an embodiment of the present invention, automatic transmission fluids are prepared by adding to a base oil a copolymer of the present invention and a detergent/inhibitor package such that the fluids have a percent shear stability index (SSI) as determined by the 20 hour Tapered Bearing Shear Test in the range of 1 % to about 80%, preferably 1 to 20%. The 20 hour Tapered Bearing Shear Test is a published standard test entitled "Viscosity Shear Stability of Transmission Lubricants" and is described in CEC L-45-T-93 (Taper Roller Bearing) and is also published as DIN 51 350, part 6, said publication being incorporated by reference herein in its entirety.

The general procedure used to prepare the butyl (meth) acrylate polymer, the preferred embodiment of the present invention, was as follows: To a 2 liter resin kettle fitted with an overhead stirrer, a thermocouple, a sparge tube, and a condenser was charged the monomer and the reaction oil. The stirrer was set at 300 rpm and the temperature was increased to 40° C. The sparge tube was replaced with a nitrogen blanket and the temperature was increased to about 78° C. Then, lauryl (dodecyl) mercaptan as a chain transfer agent was then added, followed by AIBN (azobisisobutyronitrile). The mixture was heated and stirred for 4 hours at 78° C. The temperature was then increased to about 104° C for 1.5 hours to decompose any residual catalyst. Diluent oil was added to arrive at 58% polymer solution by weight and stirring and heating continued at about 70-80° C for 1 hour. The reactor was cooled and the diluted polymer was then stored at room temperature until testing.

After preparing the copolymers and fluids in embodiments of the present invention, a final formulation may be produced that exceeds the capabilities known or expected in the art. As shown below in Table 3, a commercially available VII product, Viscoplex™ 0-030, was compared an embodiment of the present invention prepared as described herein. The preferred embodiment of the present invention, butyl (meth) acrylate (BMA) copolymers, demonstrated compatibility with a standard additive package as well as improved performance. Table 3 demonstrates the superior low temperature properties of the BMA copolymers of the present invention, wherein the two lubricant compositions were tested using the identical type and amount of additive package. No pour point depressant was added. The low temperature properties of these fluids were tested according to ASTM D 2983, which is incorporated herein by reference.

**Table 3: Test Performance of Butyl (Meth) Acrylate Compared to a Competitive Product**

| | **BMA** | **Viscoplex™** **0-030** | | **TESTING LIMITS** |
|---|---|---|---|---|
| Kinematic Viscosity, 100C (cSt) | 7.17 | 7.06 | | 7.0 cSt min |
| Kinematic Viscosity, 40C (cSt) | 33.53 | 33.21 | | 40 cSt max |
| Pour Point (C) | -45 | -48 | | -45C max |
| Brookfield @ -40C (cP) | 8480 | 15720 | | 14000 cP max |
| Brookfield @ -30C (cP) | 2660 | 4120 | | 3300 cP max |
| 20 hour KRL, % viscosity loss | 2.95 | 5.53 | | minimize |

It is clear that lubricant formulation comprising the viscosity index improver of the present invention exhibits superior low temperature properties compared to polymethacrylate viscosity index improver outside the scope of the present invention, as evidenced by the superior results in Table 3. Specifically, the inventive sample exhibited a Brookfield viscosity at -40C of 8480 cps (a "pass") versus the 15,720 cps (a "fail") for the commercially available Viscoplex 0-030™, which was selected for comparison. Similarly, the inventive example exhibited a Brookfield viscosity at -30C of 2660 cps (a "pass") versus the 4120 cps (a "fail") of the Viscoplex 0-030™.

The present invention also relates to an automatic transmission lubricated with a composition of the invention, wherein said automatic transmission is a continuously variable transmission.

This invention is susceptible to considerable variation in its practice. Accordingly, this invention is not limited to the specific exemplifications set forth hereinabove. Rather, this invention is within the spirit and scope of the appended claims, including the equivalents thereof available as a matter of law.

The patentees do not intend to dedicate any disclosed embodiments to the public, and to the extent any disclosed modifications or alterations may not literally fall within the scope of the claims, they are considered to be part of the invention under the doctrine of equivalents.

## Claims

1. An alkyl (meth) acrylate copolymer comprising:
12 to 14 weight percent of units (A) of at least one C₃-C₇ alkyl (meth) acrylate;
82 to 88 weight percent of units (B) of at least one C₁₂-C₁₄ alkyl (meth) acrylate; and
0 to 6 weight percent of units (C) of at least one C₁₆-C₂₀ alkyl (meth) acrylate.

2. A copolymer according to claim 1 comprising component (A) in an amount of 12 to 13 weight percent.

3. A copolymer according to either claim 1 or claim 2 which is essentially free from methyl (meth) acrylate units.

4. A copolymer according to any one of claims 1 to 3 wherein the C₃-C₇ alkyl (meth) acrylate is butyl (meth) acrylate.

5. A copolymer according to any one of claims 1 to 4 having an average molecular weight number from about 5,000 to about 50,000.

6. A process of producing a lubricating oil comprising adding to an oil of lubricating viscosity a copolymer according to any one of claims 1 to 5.

7. A lubricating oil composition comprising:
(A) an oil of lubricating viscosity; and
(B) a copolymer according to any one of claims 1 to 5.

8. A composition according to claim 7 which is a gear lubricant.

9. A composition according to claim 7 or claim 8 which is essentially free from methyl (meth) acrylate units.

10. A composition according to any one of claims 7 to 9 wherein component (B) is present in an amount of from 1 to 30 parts by weight of active copolymer per 100 parts by weight of oil in a final composition.

11. A composition according to any one of claims 7 to 10 further comprising at least one additive selected from oxidation inhibitors, corrosion inhibitors, friction modifiers, antiwear agents, extreme pressure agents, detergents, dispersants, antifoamants, additional viscosity index improvers, and pour point depressants.

12. A composition according to claim 11 which is an automatic transmission fluid.

13. A composition according to claim 12 having a percent shear stability index, as determined by the 20 hour Tapered Bearing Shear Test, in the range of 1% to 80%.

14. A composition according to claim 13 having a percent shear stability index in the range of 1% to 20%.

15. A composition according to claim 14 which is a continuously variable transmission fluid.

16. An automatic transmission lubricated with a composition according to any one of claims 12 to 15.

17. An automatic transmission according to claim 16 which is a continuously variable transmission.

18. A vehicle comprising an automatic transmission according to claim 16 or claim 17.

19. A method for lubricating a continuously variable transmission, comprising applying thereto the composition according to any one of claims 10 to 15.

20. A method for (a) improving the low temperature properties of an oil, or (b) improving the compatibility of a lubricating oil containing additive components, or (c) improving the viscosity index of a lubricating oil, said method comprising adding to an oil of lubricating viscosity a copolymer according to any one of claims 1 to 5.

## Patentansprüche

1. Alkyl(meth)acrylat-Copolymer, umfassend:
12 bis 14 Gew.-% von Einheiten (A) von mindestens einem C₃-C₇-Alkyl(meth)acrylat;
82 bis 88 Gew.-% von Einheiten (B) von mindestens einem C₁₂-C₁₄-Alkyl(meth)acrylat; und
0 bis 6 Gew.-% von Einheiten (C) von mindestens einem C₁₆-C₂₀-Alkyl(meth)acrylat.

2. Copolymer nach Anspruch 1, umfassend Komponente (A) in einer Menge von 12 bis 13 Gew.-%.

3. Copolymer nach entweder Anspruch 1 oder Anspruch 2, das im Wesentlichen von Methyl(meth)acrylat-Einheiten frei ist.

4. Copolymer nach einem der Ansprüche 1 bis 3, wobei das C₃-C₇-Alkyl(meth)acrylat Butyl(meth)acrylat ist.

5. Copolymer nach einem der Ansprüche 1 bis 4 mit einem zahlenmittleren Molekulargewicht von etwa 5000 bis etwa 50000.

6. Verfahren zur Herstellung eines Schmieröls, umfassend die Zugabe eines Copolymers nach einem der Ansprüche 1 bis 5 zu einem Öl von Schmierviskosität.

7. Eine Schmieröl-Zusammensetzung, umfassend:
(A) ein Öl von Schmierviskosität; und
(B) ein Copolymer nach einem der Ansprüche 1 bis 5.

8. Zusammensetzung nach Anspruch 7, die ein Getriebe-Schmiermittel ist.

9. Zusammensetzung nach Anspruch 7 oder Anspruch 8, die im Wesentlichen von Methyl(meth)acrylat-Einheiten frei ist.

10. Zusammensetzung nach einem der Ansprüche 7 bis 9, wobei Komponente (B) in einer Menge von 1 bis 30 Gewichtsteilen an aktivem Copolymer auf 100 Gewichtsteile Öl in einer Endzusammensetzung vorhanden ist.

11. Zusammensetzung nach einem der Ansprüche 7 bis 10, die weiterhin mindestens ein Additiv umfaßt, ausgewählt aus Oxidationsinhibitoren, Korrosionsinhibitoren, Reibungsmodifizierern, Antiverschleißmitteln, Extremdruckmitteln, Detergentien, Dispergiermitteln, Antischaummitteln, zusätzlichen Viskositätsindexverbesserern und Pour-point-Erniedigern.

12. Zusammensetzung nach Anspruch 11, die ein Automatikgetriebefluid ist.

13. Zusammensetzung nach Anspruch 12, mit einem Scherstabilitätsindex in Prozent, bestimmt durch den 20-Stunden-Kegelrollenlager-Schertest, im Bereich von 1 % bis 80 %.

14. Zusammensetzung nach Anspruch 13 mit einem Scherstabilitätsindex im Bereich von 1 % bis 20 %.

15. Zusammensetzung nach Anspruch 14, die ein kontinuierlich variables Getriebefluid ist.

16. Automatikgetriebe, das mit einer Zusammensetzung nach einem der Ansprüche 12 bis 15 geschmiert ist.

17. Automatikgetriebe nach Anspruch 16, das ein kontinuierlich variables Getriebe ist.

18. Fahrzeug, umfassend ein Automatikgetriebe nach Anspruch 16 oder 17.

19. Verfahren zum Schmieren eines kontinuierlich variablen Getriebes, umfassend das Aufbringen der Zusammensetzung nach einem der Ansprüche 10 bis 15 darauf.

20. Verfahren zum (a) Verbessern der Niedertemperatureigenschaften eines Öls oder (b) Verbessern der Kompatibilität eine Schmieröls, das Additivkomponenten enthält, oder (c) Verbessern des Viskositätsindex eines Schmieröls, wobei das Verfahren die Zugabe eines Copolymers nach einem der Ansprüche 1 bis 5 zu einem Öl von Schmierviskosität umfasst.

## Revendications

1. Copolymère de (méth)acrylates d'alkyle comprenant :
12 à 14 pour cent en poids de motifs (A) d'au moins un (méth)acrylate d'alkyle en C₃ à C₇ ;
82 à 88 pour cent en poids de motifs (B) d'au moins un (méth)acrylate d'alkyle en C₁₂ à C₁₄ ; et
0 à 6 pour cent en poids de motifs (C) d'au moins un (méth)acrylate d'alkyle en C₁₆ à C₂₀.

2. Copolymère selon la revendication 1, comprenant le composant (A) en une quantité de 12 à 13 pour cent en poids.

3. Copolymère selon l'une ou l'autre des revendications 1 et 2, qui est essentiellement dépourvu de motifs de (méth)acrylate de méthyle.

4. Copolymère selon l'une quelconque des revendications 1 à 3, dans lequel le (méth)acrylate d'alkyle en C₃ à C₇ est le (méth)acrylate de butyle.

5. Copolymère selon l'une quelconque des revendications 1 à 4, ayant un poids moléculaire moyen en nombre d'environ 5000 à environ 50 000.

6. Procédé de production d'une huile lubrifiante comprenant l'addition à une huile de viscosité propre à la lubrification d'un copolymère selon l'une quelconque des revendications 1 à 5.

7. Composition d'huile lubrifiante comprenant :
(A) une huile de viscosité propre à la lubrification ; et
(B) un copolymère selon l'une quelconque des revendications 1 à 5.

8. Composition selon la revendication 7, qui est un lubrifiant pour engrenages.

9. Composition selon la revendication 7 ou la revendication 8, qui est essentiellement dépourvue de motifs de (méth)acrylate de méthyle.

10. Composition selon l'une quelconque des revendications 7 à 9, dans laquelle le composant (B) est présent en une quantité de 1 à 30 parties en poids de copolymère actif pour 100 parties en poids d'huile dans une composition finale.

11. Composition selon l'une quelconque des revendications 7 à 10, comprenant de plus au moins un additif choisi parmi les inhibiteurs d'oxydation, les inhibiteurs de corrosion, les modificateurs de frottement, les agents anti-usure, les agents extrême-pression, les détergents, les dispersants, les agents antimousse, d'autres additifs améliorant l'indice de viscosité et les agents abaissant le point d'écoulement.

12. Composition selon la revendication 11, qui est un fluide de transmission automatique.

13. Composition selon la revendication 12, ayant un indice de stabilité au cisaillement en pourcentage, tel que déterminé par l'Essai de Cisaillement à Palier Conique de 20 heures, compris dans l'intervalle de 1 % à 80 %.

14. Composition selon la revendication 13, ayant un indice de stabilité au cisaillement en pourcentage compris dans l'intervalle de 1 % à 20 %.

15. Composition selon la revendication 14, qui est un fluide de transmission à variation continue.

16. Transmission automatique lubrifiée avec une composition selon l'une quelconque des revendications 12 à 15.

17. Transmission automatique selon la revendication 16, qui est une transmission à variation continue.

18. Véhicule comprenant une transmission automatique selon la revendication 16 ou la revendication 17.

19. Procédé pour la lubrification d'une transmission à variation continue, consistant à appliquer à celle-ci la composition selon l'une quelconque des revendications 10 à 15.

20. Procédé pour (a) améliorer les propriétés à basse température d'une huile, ou (b) améliorer la compatibilité d'une huile lubrifiante contenant des composants additifs, ou (c) améliorer l'indice de viscosité d'une huile lubrifiante, ledit procédé comprenant l'addition à une huile de viscosité propre à la lubrification d'un copolymère selon l'une quelconque des revendications 1 à 5.
